# EUROPEAN PATENT APPLICATION

(11) **EP 2 706 728 A1**
(43) Date of publication of application: **12.03.2014**
(21) Application number: 12779860.1
(22) Date of filing: 09.04.2012
(51) Int. Cl.: H04L 29/08

(54) **METHOD AND DEVICE FOR IMPROVING VOICE OR VIDEO TRANSMISSION QUALITY IN A CLOUD COMPUTING MODE**

(30) Priority: 09.10.2011 CN 201110302894
(71) Applicant: Huawei Technologies Co., Ltd., Shenzhen, Guangdong 518129 (CN)
(72) Inventor: LIU, Mingcun, Shenzhen Guangdong 518129 (CN)
(74) Representative: Goddar, Heinz J.
(86) International application number: PCT/CN2012/073627
(87) International publication number: WO 2012/149852

(57) **Abstract**

An embodiment of the present invention provides a method for improving voice or video transmission quality in the cloud computing mode, where the method mainly includes: performing, by a cloud client , media negotiation with a communication peer end according to obtained media negotiation information of a corresponding local client ; and establishing, according to a result of the media negotiation, a media channel between the local client and the communication peer end to perform voice or video transmission. An embodiment of the present invention further provides a corresponding cloud client and a corresponding local client. According to the method disclosed in the embodiments of the present invention, two client ends work collaboratively and a media channel is established on the local client, thereby ensuring voice or video transmission quality in the cloud computing mode.

## Description

### FIELD OF THE INVENTION

The present invention relates to the field of communications technologies, and in particular, to a method and an apparatus for improving voice or video transmission quality in a cloud computing mode.

### BACKGROUND OF THE INVENTION

Cloud computing (cloud computing) is an Internet-based computing manner. Through this manner, shared software and hardware resources and information may be provided to a computer and another device according to requirements and a whole operating manner is similar to an electricity network. The cloud computing is another dramatic evolution since the great transformation from a mainframe computer to a client end - server in the 1980s. The cloud computing describes a new Internet-based mode for adding, using, and delivering IT services, and generally relates to providing dynamic, easily-extensible, and usually virtualized resources through the Internet.

The existing typical application mode of cloud computing is a virtual machine - client mode. A cloud computing service provider sets a virtual machine on a server according to user's requirements, and performs various calculations according to the data and software stored on the server. A user accesses the server locally, controls the virtual machine through a client, and completes various personalized applications.

Voice or video transmission is performed by using the foregoing mode. A currently common method is that transmission software is deployed on the virtual machine; media negotiation is performed between the virtual machine and a peer end; after the negotiation, a media channel is established between the virtual machine and the peer end; and voice or a video is transmitted to the virtual machine, and then is transmitted to the client after being coded or decoded by the virtual machine.

Through analysis of the prior art, the inventor finds that the prior art has at least the following problems: In the prior art, a delay caused by media transmitting between the virtual machine and the client exceeds 200 ms a lot, so that the transmission quality cannot be ensured.

### SUMMARY OF THE INVENTION

The objectives of embodiments of the present invention are to provide a method and an apparatus for improving voice or video transmission quality in a cloud computing mode so as to solve a problem in the cloud computing mode in the prior art that the quality of voice or video transmission between a client and a peer end is poor.

In one aspect, an embodiment of the present invention provides a method for improving voice or video transmission quality in a cloud computing mode, where the method includes: performing, by a cloud client , media negotiation with a communication peer end according to obtained media negotiation information of a corresponding local client ; and establishing, according to a result of the media negotiation, a media channel between the local client and the communication peer end to perform voice or video transmission.

In another aspect, an embodiment of the present invention provides a method for improving voice or video transmission quality in a cloud computing mode, including: reporting, by a local client end, its media negotiation information to a cloud client end which corresponds to the local client end, and receiving media negotiation information which is of a communication peer end and is sent by the cloud client end so that the cloud client end establishes a media channel between the local client end and the communication peer end; and performing voice or video transmission with the communication peer end by using the media channel.

In another aspect, an embodiment of the present invention provides a cloud cloud client , including: a media negotiation unit, configured to perform media negotiation with a communication peer end according to obtained media negotiation information of a corresponding local client ; and a transmission control unit, configured to establish, according to a result of the media negotiation, a media channel between the local client and the communication peer end to control a process of voice or video transmission.

In another aspect, an embodiment of the present invention provides a local client , including: a local media negotiation unit, configured to send media negotiation information of the local client to a cloud client , and receive media negotiation information which is of a communication peer end and is sent by the cloud client , and implement media negotiation with the communication peer end; and a media transmission unit, configured to perform voice or video transmission with the communication peer end by using a media channel established after the media negotiation is completed.

In another aspect, an embodiment of the present invention provides a voice or video transmission system which is used in a cloud computing mode, including: a cloud client , configured to obtain media negotiation information of a local client , perform media negotiation with a communication peer end according to the media negotiation information of the local client, and establish a media channel between the local client and the communication peer end according to a result of the media negotiation; and a local client , configured to perform voice or video transmission with the communication peer end by using an established media channel.

In the technical solutions of the present invention, client ends of transmission software in the prior art are separately deployed on the virtual machine at a cloud end and the client at a local end. Two client ends work collaboratively and establish the media channel between the local client and the peer end, so as to overcome a problem in the prior art that a delay is caused during voice or video transmission between the client and the virtual machine, thereby improving the voice or video transmission quality in the cloud computing mode.

### BRIEF DESCRIPTION OF THE DRAWINGS

To describe the technical solutions in the embodiments of the present invention or in the prior art more clearly, the accompanying drawings required for describing the embodiments or the prior art are briefly introduced in the following. Apparently, the accompanying drawings in the following description are only some embodiments of the present invention, and persons skilled in the art may further derive other drawings according to these accompanying drawings without creative efforts.
FIG. 1 is a flow chart of voice or video transmission according to an embodiment of the present invention;
FIG. 2 is a flow chart of a cloud client exchanging media negotiation information of a local client and a communication peer end according to an embodiment of the present invention;
FIG. 3 is a schematic diagram of directly establishing communication between a cloud client and a local client according to an embodiment of the present invention;
FIG. 4 is a flow chart of associating a cloud client with a local client through a registration server according to an embodiment of the present invention;
FIG. 5 is a flow chart of obtaining, by a cloud client , media negotiation information of a local client through a registration server according to an embodiment of the present invention;
FIG. 6 is a flow chart of sending, by a cloud client, media negotiation information of a communication peer end to a local client through a registration server according to an embodiment of the present invention;
FIG. 7 is a flow chart of calling by using UC according to an embodiment of the present invention;
FIG. 8 is a flow chart of being called by using UC according to an embodiment of the present invention;
FIG. 9 is a schematic diagram of a cloud client according to an embodiment of the present invention;
FIG. 10 is a schematic diagram of a local client according to an embodiment of the present invention; and
FIG. 11 is a schematic diagram of a voice or video transmission system according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the described embodiments are merely a part rather than all of the embodiments of the present invention. All other embodiments obtained by persons skilled in the art based on the embodiments of the present invention without creative efforts shall fall within the protection scope of the present invention.

### Embodiment 1

Factors affecting voice or video transmission quality include delay, jitter, and packet loss on a network. Particularly, the transmission quality is ensured generally when the delay is controlled within 200 ms. In a common method for voice or video transmission in the prior art, two aspects of factors affect the voice or video transmission quality. In one aspect, a transmission channel between a client and a virtual machine adopts the TCP/IP protocol. However, a typical characteristic of the TCP/IP protocol is that a lost data packet is retransmitted, and the delay and packet retransmission which are brought cause the transmission quality to degrade. In another aspect, media is transmitted between the virtual machine and the client, and the delay caused by coding, packetization, compression, and unpacketization is about 500 ms, and the transmission quality is also greatly affected.

An embodiment of the present invention provides a method for improving voice or video transmission quality in a cloud computing mode. Transmission software is divided into two client ends. For ease of description, a client end deployed on a virtual machine is called a cloud client, and a client end deployed on a client is called a local client.

The cloud client is responsible for exchanging media negotiation information of the local client and a communication peer end, and establishing a media channel between the local client and the communication peer end. The local client performs voice or video transmission through the media channel, and completes voice or video coding/decoding. The communication peer end may be a network entity communicating with the cloud client and the local client by using a communication protocol and having voice or video transmission capabilities.

The foregoing cloud client, local client, and communication peer end may also be named in another way. For example, the cloud client may also be referred to as a virtual client end, and the local client may also be referred to as a client side or a thin client, which are not limited in the embodiments of the present invention.

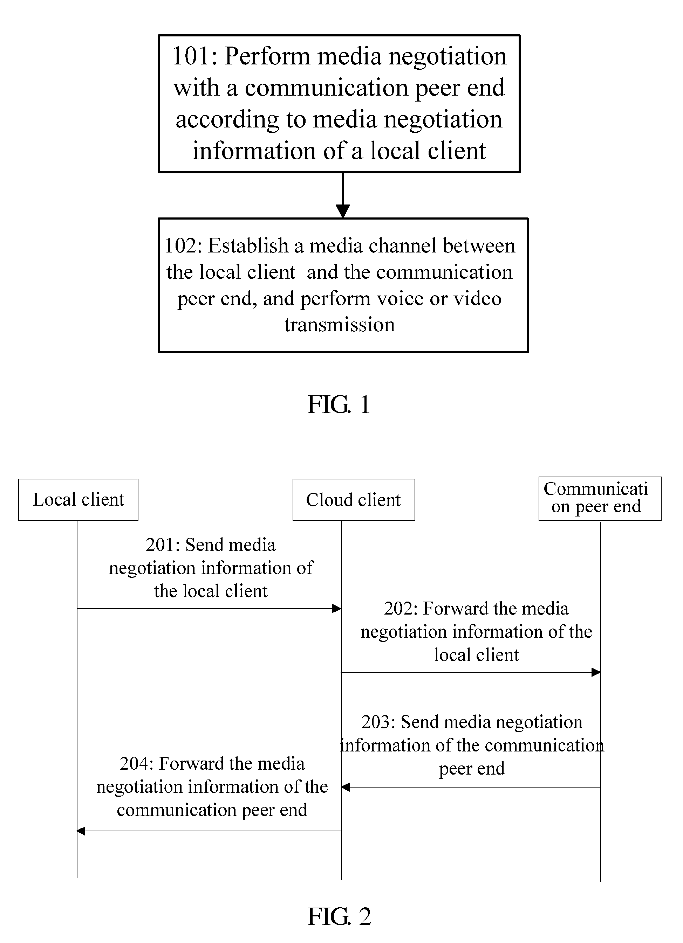

As shown in FIG. 1, this embodiment of the present invention includes the following steps:
Step 101: The cloud client performs media negotiation with the communication peer end according to obtained media negotiation information of a corresponding local client.
   The media negotiation information of the local client includes media information supported by the local client and an IP address and port information of the client where the local client is located. Accordingly, media negotiation information of the communication peer end includes media information supported by the communication peer end, and an IP address and port information of the communication peer end.
Step 102: After the media negotiation is completed, establish the media channel between the local client and the communication peer end through the RTP (Real-time Transport Protocol, real-time transport protocol) according to the media negotiation result, and perform voice or video transmission between the local client and the communication peer end.

Further, in the foregoing step 101, the cloud client performs the media negotiation with the communication peer end according to the obtained media negotiation information of the corresponding local client. That is, steps for exchanging the media negotiation information of the local client and the communication peer end by the cloud client is shown in FIG. 2:
Step 201: The local client sends the media negotiation information of the local client according to an instruction of the cloud client.
Step 202: The cloud client forwards the media negotiation information of the foregoing local client to the communication peer end.
Step 203: The communication peer end sends the media negotiation information of the communication peer end to the cloud client.
Step 204: The cloud client forwards the media negotiation information of the foregoing communication peer end to the local client.

For the foregoing steps 201 to 204, it can be seen that step 201 and step 204 describe information exchange between the cloud client and the local client. Specifically, the exchanged information includes the media negotiation information of the local client and the communication peer end, and further includes control information of the cloud client to the local client. Step 202 and step 203 describe information exchange between the cloud client and the communication peer end. Specifically, the exchanged information includes the media negotiation information which is of the corresponding local client and is obtained by the cloud client, and the media negotiation information of the communication peer end.

In this embodiment of the present invention, the transmission software is separately deployed on the virtual machine and the client, and the media channel is established between the local client and the communication peer end. In this way, voice or video transmission is not implemented through the channel between the virtual machine and the client (that is, the local client). This may effectively solve a problem of the delay caused during voice or video transmission between the virtual machine and the client in the prior art, thereby improving the transmission quality.

### Embodiment 2

As for the information exchange between a cloud client and a local client , this embodiment of the present invention provides two exchange manners: one manner is direct exchange through a channel between two client ends, and the other manner is using a registration server as a medium for exchange.

Specifically, this embodiment describes how the direct information exchange through the channel between the two client ends is implemented.

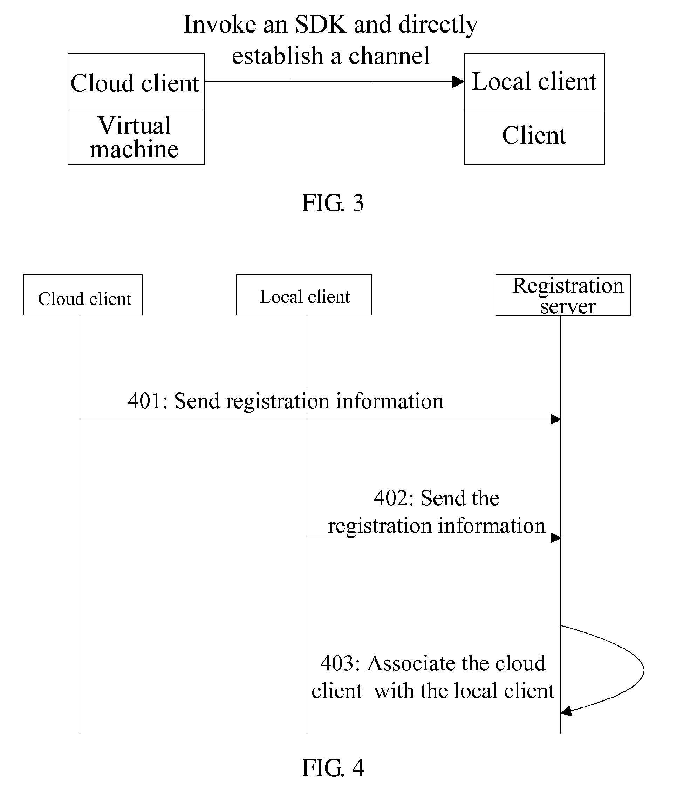

As shown in FIG. 3, the cloud client and the local client invokes an SDK (Software Development Kit, software development kit) provided by a virtual machine software manufacturer to establish a channel, respectively. The two client ends perform information exchange through the channel.

Information exchange using this manner is implemented by directly using the channel established between the two client ends, without any additional devices or steps. This may ensure the efficiency in information exchange between the cloud client and the local client.

### Embodiment 3

This embodiment of the present invention describes in detail how information exchange between a cloud client and a local client by using a registration server as a medium is implemented.

The registration server serves as the medium for information exchange between the cloud client and the local client, and mainly completes forwarding of media and control information of the cloud client and the local client.

To implement the information exchange between the cloud client and the local client by using the registration server as the medium, at first, the cloud client needs to be associated with the local client through the registration server. This embodiment of the present invention provides a method of associating the cloud client with the local client through the registration server. As shown in FIG. 4, the method includes the following steps:
Step 401: The registration server receives registration information of the cloud client, where the registration information includes a user ID, and an IP address and a listening port of a virtual machine where the cloud client is located.
Step 402: The registration server receives registration information of the local client, where the registration information includes a user ID, and an IP address and a listening port of a client where the local client is located.
Step 403: Associate the cloud client and the local client according to the foregoing user IDs of the cloud client and the local client.

After the association is completed, the cloud client exchanges information with the local client by using the registration server as the medium, the cloud client sends instruction information to the local client through the registration server, and the local client makes a response and feeds back to the cloud client through the registration server.

The foregoing steps 401 and 402 do not mean that the cloud client and the local client need to register with the registration server in sequence. For obtaining the registration information of the two client ends by the registration server, this embodiment of the present invention does not limit a sequence relationship of the information obtaining.

Specifically, the information exchange between the two client ends includes two processes: a process of obtaining media negotiation information of the local client by the cloud client through the registration server, and a process of sending media negotiation information of a communication peer end to the local client by the cloud client through the registration server. These two processes are described in detail in the following, respectively:

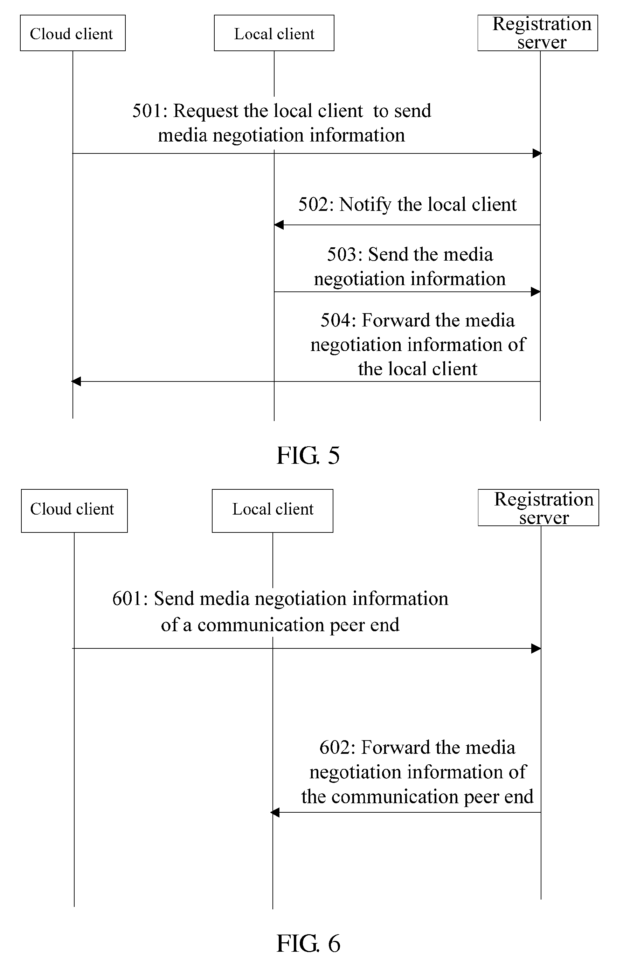

This embodiment of the present invention provides a process that the cloud client obtains the media negotiation information of the local client through the registration server. As shown in FIG. 5, the process includes the following steps:
Step 501: The cloud client sends a message to the registration server to request the local client to send its media negotiation information.
Step 502: The registration server forwards instruction information of the cloud client to the local client.
Step 503: The local client makes a response and sends its media negotiation information to the registration server.
Step 504: The registration server forwards the media negotiation information of the local client to the cloud client.

This embodiment of the present invention provides a process that the cloud client sends media negotiation information of the communication peer end to the local client through the registration server. As shown in FIG. 6, the process includes the following steps:
Step 601: Send the media negotiation information of the communication peer end to the registration server to request the registration server to forward the media negotiation information to the local client.
Step 602: The registration server forwards the media negotiation information of the communication peer end to the local client.

The foregoing registration server is only a generic term of a server implementing a function of an information exchange medium in the embodiments of the present invention, and therefore, the name is not limited in the implementation of the solutions of the present invention.

The foregoing cloud client and local client implement information exchange through the registration server, which only requires that the cloud client and the local client have a capability of registering with the registration server, without relying on an SDK provided by a virtual machine software manufacturer, and therefore, whether communication can be directly implemented between the two client ends does not need to be considered, and the foregoing cloud client and local client implementing information exchange through the registration server has good universality.

Similar to the foregoing manner of exchanging information between the cloud client and the local client by using the registration server as the medium, information exchange between the cloud client and the communication peer end also needs to use an application server as a medium. The application server includes a call control server and a state, group and messaging server to implement call control, state, group and messaging functions.

### Embodiment 4

The voice or video transmission in this embodiment of the present invention includes the case of transmitting by one party and receiving by the other party, and also includes the case where the two parties involved in the transmission make a voice or video call in real time. In combination with the technical solution disclosed in the foregoing embodiments, this embodiment of the present invention provides a solution of making the voice or video call by using unified communication (UC, Unified Communication) software in a cloud computing mode.

With reference to the technical solutions provided in the embodiments of the present invention, a UC client end is divided into two parts, which are deployed on a virtual machine side and a client side, respectively. These two client ends implement information exchange through a registration server. Specifically, similar to the technical solutions provided in the foregoing embodiments, the UC client end deployed on the virtual machine may be referred to as a cloud UC client , and the UC client end deployed on the client side may be referred to as a local UC client. The cloud UC client provides a user control interface for exchanging media negotiation information of the local UC client and a communication peer end. The local UC client mainly implements tasks such as voice or video coding/decoding, and it does not provide the user control interface and does not have media negotiation capabilities.

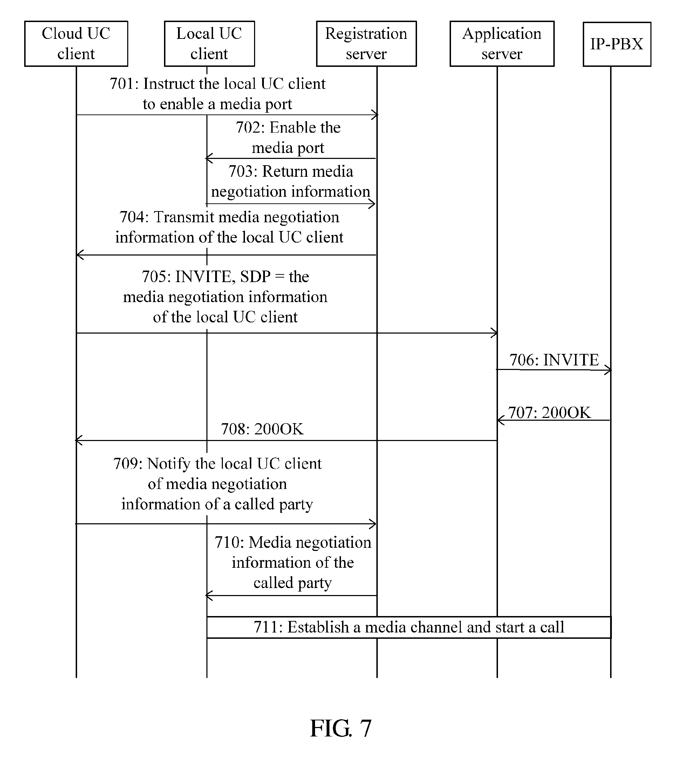

As shown in FIG. 7, an embodiment of the present invention provides a calling solution by using the UC. Specifically, the communication peer end in the solution may be referred to a called party.

The steps illustrated in FIG. 7 may be classified into two phases. At a first phase, the cloud UC client sends a call request to the called party and exchanges the media negotiation information of the local UC client and the called party. At a second phase, according to a result of the media negotiation information exchange, a media channel is established between the local UC client and the called party to make the voice or video call.

With reference to FIG. 7, each step of implementing the calling solution is described in detail:
Step 701: The cloud UC client sends a message to the registration server to request the local UC client to enable a media port.
Step 702: The registration server instructs the local UC client to enable the media port.
Step 703: The local UC client enables the media port and sends its media negotiation information to the registration server.
Step 704: The registration server returns media negotiation information of the local UC client to the cloud UC client.
   After the foregoing steps 701 to 704, the cloud UC client obtains the media negotiation information of the local UC client and may initiate a call to the called party according to the information.
Step 705: The cloud UC client sends an INVITE message to an application server to request the voice or video call, and carries the media negotiation information of the local UC client by using an SDP (Session Description Protocol, session description protocol).
Step 706: The application server calls the called party through an IP-PBX.
   The IP-PBX (IP-Private Branch Exchange) is a dedicated switch based on the IP protocol, which is applied in an office organization such as an enterprise and a group, mainly implements an interconnection function between the Internet and a telecom network, and at the same time, is responsible for media conversion between the VOIP and a telecom domain.
Step 707: The IP-PBX returns 2000K information and media negotiation information of the called party to the application server.
Step 708: The application server notifies the cloud UC client that the call can be made to the called party and sends the media negotiation information of the called party to the cloud UC client.
   After the foregoing steps 705 to 708, the cloud UC client calls the called party, sends media negotiation information of the local UC client to the called party, and in another aspect, obtains the media negotiation information of the called party. To establish a media channel between the local UC client and the called party, the media negotiation information of the called party further needs to be sent to the local UC client :
Step 709: The cloud UC client sends the media negotiation information of the called party to the registration server, and requests the registration server to notify the local UC client.
Step 710: The registration server notifies the local UC client of the media negotiation information of the called party.
   In steps 709 to 710, the cloud UC client sends the media negotiation information of the called party to the local UC client to complete exchange of the media negotiation information of the local UC client and the called party.
Step 711: The local UC client establishes the media channel with the called party and makes the voice or video call.

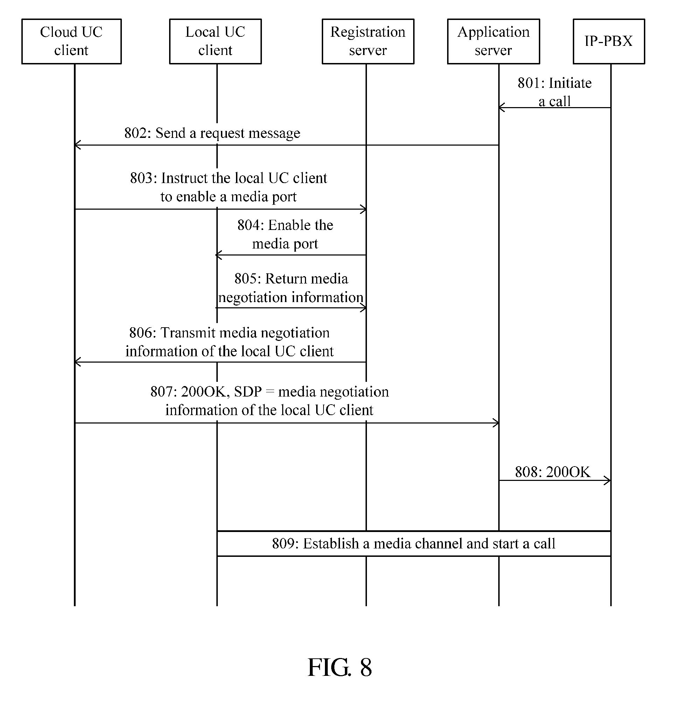

At the same time, the embodiment of the present invention provides a called solution. Specifically, the communication peer end in the solution is referred to as a calling party. Similar to the calling solution, the called solution may also be classified into two phases: media negotiation information exchange phase and call phase. FIG. 8 shows the detailed steps, including:
Step 801: The calling party sends a call request through the IP-PBX, where the request message carries media negotiation information of the calling party.
Step 802: The application server forwards the call request to the cloud UC client.
Step 803: The cloud UC client accepts the call request, sends the media negotiation information of the calling party to the local UC client through the registration server, and at the same time, request the local UC client to enable the media port.
   After the foregoing steps 801 to 803, the cloud UC client accepts the call request, and obtains the media negotiation information of the calling party. Exchange of media negotiation information of the calling party and the local UC client is described in the following:
Step 804: The registration server forwards the media negotiation information of the calling party to the local UC client, and instructs the local UC client to enable the media port.
Step 805: The local UC client enables the media port, and returns the media negotiation information to the registration server.
Step 806: The registration server sends the media negotiation information of the local UC client to the cloud UC client.
Step 807: The cloud UC client notifies the application server that a call can be made to the local UC client, and at the same time, carries the media negotiation information of the local UC client by using the SDP protocol.
Step 808: The application server notifies the calling party through the IP-PBX that the local UC client can start a call, and sends the media negotiation information of the local UC client to the calling party.
   After the foregoing steps 804 to 808, exchange of the media negotiation information of the calling party and the local UC client is completed, and then a media channel may be established between the calling party and the local UC client for making a call.
Step 809: The calling party establishes the media channel with the local UC client and starts a call.

In this embodiment of the present invention, the UC client end is separately deployed. The two client ends work collaboratively. The cloud UC client is responsible for completing media negotiation and control, and the local UC client is responsible for media coding/decoding. The media channel is established between the local UC client and the peer end, overcoming a problem that the call quality is poor due to a delay caused during voice or video transmission between the client and the virtual machine. In this way, the quality of the voice or video call in the cloud computing mode is ensured.

The foregoing solution where the voice or video call is performed by using the unified communication is only a specific application of the embodiments of the present invention. Persons skilled in the art may be aware that the implementation of the technical solutions of the present invention is not limited to an application environment of the unified communication.

Applying the technical solutions provided in this embodiment of the present invention, not only bidirectional voice or video transmission can be performed, but also unidirectional voice or video transmission can be performed. By using the technical solution disclosed in the foregoing embodiments, the unidirectional voice or video transmission can be completely implemented as long as either of the two parties to the call is a voice or video playing source.

### Embodiment 5

This embodiment of the present invention provides a cloud client, which is configured to implement a method which is for improving voice or video transmission quality in a cloud computing mode and is disclosed in the foregoing method embodiments of the present invention.

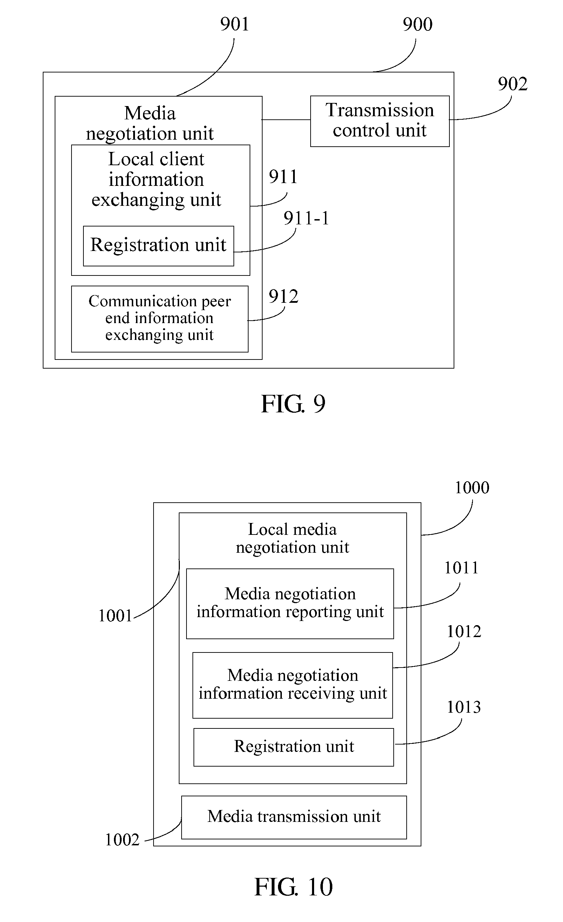

As shown in FIG. 9, the cloud client 900 includes a media negotiation unit 901 and a transmission control unit 902, specifically:
the media negotiation unit 901 is configured to, according to obtained media negotiation information of a corresponding local client , perform media negotiation with a communication peer end to implement exchange of media negotiation information of the local client and the communication peer end; and
the transmission control unit 902 is configured to establish, according to an exchange result of the media negotiation information, a media channel between the local client and the communication peer end, and control a process of voice or video transmission.

The foregoing media negotiation unit 901 further includes:
a local client information exchanging unit 911, configured to obtain media negotiation information of the local client and send the media negotiation information of the communication peer end to the local client to implement media negotiation information exchange with the local client; and
a communication peer end information exchanging unit 912, configured to obtain the media negotiation information of the communication peer end and send the media negotiation information of the local client to the communication peer end.

Further, the foregoing local client information exchanging unit 911 includes a registration unit 911-1, which is configured to register the cloud client with a registration server so that the cloud client exchanges information with the local client through the registration server.

Corresponding to the foregoing cloud client, an embodiment of the present invention also provides a local client.

As shown in FIG. 10, the local client 1000 includes a local media negotiation unit 1001 and a media transmission unit 1002, specifically:
the local media negotiation unit 1001 is configured to generate media negotiation information of the local client and report the media negotiation information of the local client to the cloud client; and configured to receive media negotiation information which is of the communication peer end and is sent by the cloud client, and implement media negotiation with the communication peer end; and
the media transmission unit 1002 is configured to, through a media channel which is between the local client 1000 and the communication peer end and is established by the cloud client, perform voice or video transmission with the communication peer end.

The local media negotiation unit 1001 further includes a media negotiation information reporting unit 1011, a media negotiation information receiving unit 1012, and a registration unit 1013, specifically:
the media negotiation information reporting unit 1011 is configured to generate the media negotiation information of the local client and report the media negotiation information of the local client to the cloud client ;
the media negotiation information receiving unit 1012 is configured to receive the media negotiation information which is of the communication peer end and is sent by the cloud client; and
the registration unit 1013 is configured to register the local client with the registration server so as to implement information exchange of the local client and the cloud client.

According to this embodiment of the present invention, the cloud client and the local client work collaboratively, and can solve a problem that the voice or video transmission has a delay in the cloud computing mode, thereby improving transmission quality.

### Embodiment 6

This embodiment of the present invention provides a voice or video transmission system which is used in a cloud computing mode, where the system is used for implementing a method which is for improving voice or video transmission quality in the cloud computing mode and is disclosed in the embodiments of the present invention.

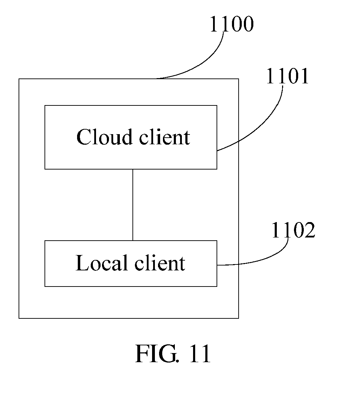

As shown in FIG. 11, the transmission system 1100 includes a cloud client 1101 and a local client 1102, specifically:
the cloud client 1101 is configured to obtain media negotiation information of the local client 1102, perform media negotiation with a communication peer end according to the media negotiation information of the local client , and establish a media channel between the local client and the communication peer end according to a result of media negotiation; and
the local client 1102 is configured to report its media negotiation information to the cloud client 1101 so that the cloud client establishes the media channel with the communication peer end by using the media negotiation information of the local client 1102; the local client 1102 performs voice or video transmission with the communication peer end by using the established media channel.

The cloud client 1101 obtains the media negotiation information of the local client 1102, which may be specifically implemented in two exchange manners: one manner is exchange by using a registration server as a medium, and the other manner is direct exchange by using a channel between two client ends.

In the transmission system according to this embodiment of the present invention, the cloud client and the local client work collaboratively, and can solve a problem that the voice or video transmission has a delay in the cloud computing mode, thereby improving transmission quality.

It can be known through the description of the foregoing embodiments, persons skilled in the art can clearly know that all or a part of steps of the method in the foregoing embodiments may be implemented by using a manner of software in combination with a necessary general hardware platform. Based on such understanding, the essence of the technical solutions of the present invention or a part of the technical solutions that make contributions to the prior art may be embodied in a form of a software product. The software product of the computer may be stored in a storage medium, for example, a ROM/RAM, a magnetic disk, or a compact disk, and includes a number of instructions which are used to enable a computer device (which may be a personal computer, a server, or a network device) to execute the methods described in each embodiment or in some part of the embodiments of the present invention.

It should be noted that in the specification, each embodiment is described by adopting a progressive manner. The same and similar parts between each embodiment may be cross-referenced, and each embodiment focuses a difference between the embodiment and other embodiments. Particularly, the apparatus embodiments are described rather briefly due to its similarity to the method embodiments basically. For the execution process of specific functions of each unit, reference may be made to some descriptions of the method embodiments. The foregoing-described apparatus embodiments are merely schematic, where the units described as separate components may be or may not be physically independent of each other. The components displayed as units may be or may not be a physical unit, which can be either located at a position or may be distributed on multiple network units. A part of or all of the modules among them may be selected according to actual requirements so as to implement the objectives of the solutions of the embodiments. Persons skilled in the art may understand and implement the embodiments without any creative effort.

In conclusion, the foregoing descriptions are only exemplary embodiments of the technical solutions of the present invention and are not intended to limit the protection scope of the present invention. Any modification, equivalent replacement, or improvement made within the spirit and principle of the present invention shall fall within the protection scope of the present invention.

## Claims

1. A method for improving voice or video transmission quality in a cloud computing mode, wherein the method comprises:
performing, by a cloud client , media negotiation with a communication peer end according to obtained media negotiation information of a corresponding local client; and
establishing, according to a result of the media negotiation, a media channel between the local client and the communication peer end to perform voice or video transmission.

2. The method according to claim 1, wherein the step of performing, by the cloud client , the media negotiation with the communication peer end according to the obtained media negotiation information of the corresponding local client comprises:
obtaining the media negotiation information of the local client;
sending the media negotiation information of the local client to the communication peer end, and obtaining media negotiation information of the communication peer end; and
sending the obtained media negotiation information of the communication peer end to the local client.

3. The method according to claim 2, wherein the obtaining the media negotiation information of the local client and the sending the media negotiation information of the communication peer end to the local client are completed by using a registration server as a medium.

4. The method according to claim 2, wherein the obtaining the media negotiation information of the local client and the sending the media negotiation information of the communication peer end to the local client are completed directly through a channel between the cloud client and the local client.

5. The method according to claim 3, wherein the step of obtaining the media negotiation information of the local client by using the registration server as the medium comprises:
sending a request message to the registration server to request the local client to send its media negotiation information; and
receiving the media negotiation information which is of the local client and is forwarded by the registration server.

6. The method according to claim 3 or 5, wherein the step of sending the media negotiation information of the communication peer end to the local client by using the registration server as the medium comprises:
sending the request message carrying the media negotiation information of the communication peer end to the registration server to request the register server to send the media negotiation information of the communication peer end to the local client.

7. The method according to any one of claims 3, 5, or 6, wherein the obtaining the media negotiation information of the local client by using the registration server as the medium and the sending the media negotiation information of the communication peer end to the local client by using the registration server as the medium require that the cloud client and the local client register with the registration server, respectively.

8. The method according to any one of claims 2 to 7, wherein the media negotiation information of the local client comprises media information supported by the local client, and an IP address and port information of a client where the local client is located; and
the media negotiation information of the communication peer end comprises media information supported by the communication peer end, and an IP address and port information.

9. A method for improving voice or video transmission quality in a cloud computing mode, comprising:
reporting, by a local client end, its media negotiation information to a cloud client end which corresponds to the local client end, and receiving media negotiation information which is of a communication peer end and is sent by the cloud client end, so that the cloud client end establishes a media channel between the local client end and the communication peer end; and
performing voice or video transmission with the communication peer end by using the media channel.

10. The method according to claim 9, wherein the reporting, by the local client end, its media negotiation information to the cloud client end which corresponds to the local client end, and the receiving the media negotiation information which is of the communication peer end and is sent by the cloud client end may be completed through a registration server or completed directly through a channel between the cloud client end and the local client end.

11. A cloud client, comprising:
a media negotiation unit, configured to perform media negotiation with a communication peer end according to obtained media negotiation information of a corresponding local client ; and
a transmission control unit, configured to, according to a result of the media negotiation, establish a media channel between the local client and the communication peer end, and control a process of voice or video transmission.

12. The cloud client according to claim 11, wherein the media negotiation unit comprises a local client information exchanging unit and a communication peer end information exchanging unit; wherein:
the local client information exchanging unit is configured to obtain media negotiation information of the local client and send media negotiation information of the communication peer end to the local client; and
the communication peer end information exchanging unit is configured to obtain the media negotiation information of the communication peer end and send the media negotiation information of the local client to the communication peer end.

13. The cloud client according to claim 12, wherein the local client information exchanging unit further comprises a registration unit, which is configured to register the cloud client with a registration server.

14. A local client, comprising:
a local media negotiation unit, configured to send media negotiation information of the local client to a cloud client , and receive media negotiation information which is of a communication peer end and is sent by the cloud client , and implement media negotiation with the communication peer end; and
a media transmission unit, configured to perform voice or video transmission with the communication peer end by using a media channel established after the media negotiation is completed.

15. The local client according to claim 14, wherein the local media negotiation unit further comprises:
a media negotiation information reporting unit, configured to generate the media negotiation information of the local client and report the media negotiation information of the local client to the cloud client ;
a media negotiation information receiving unit, configured to receive the media negotiation information which is of the communication peer end and is sent by the cloud client; and
a registration unit, configured to register the local client with a registration server.

16. A voice or video transmission system which is used in a cloud computing mode, wherein the system comprises:
a cloud client, configured to obtain media negotiation information of a local client, perform media negotiation with a communication peer end according to the media negotiation information of the local client, and establish a media channel between the local client and the communication peer end according to a result of the media negotiation; and
a local client , configured to perform voice or video transmission with the communication peer end by using the established media channel.
